# EUROPEAN PATENT APPLICATION

(11) **EP 4 807 426 A1**
(43) Date of publication of application: **16.09.2026**
(21) Application number: 24957717.2
(22) Date of filing: 05.12.2024
(51) Int. Cl.: G02B 23/16

(54) **BINOCULAR HANDHELD DEVICE**

(30) Priority: 16.10.2024 CN 202411446028; 16.10.2024 CN 202422503739 U
(71) Applicant: Raytron Technology Co., Ltd., Yantai, Shandong 264006 (CN)
(72) Inventor: YANG, Hui, China (Shandong) Pilot Free Trade Zone Yantai, Shandong 264006 (CN); LI, Jingmin, China (Shandong) Pilot Free Trade Zone Yantai, Shandong 264006 (CN); LIU, Dawei, China (Shandong) Pilot Free Trade Zone Yantai, Shandong 264006 (CN)
(74) Representative: Studio Torta S.p.A.
(86) International application number: PCT/CN2024/137026
(87) International publication number: WO 2026/081316

(57) **Abstract**

A binocular handheld device, comprising a first lens barrel assembly and a second lens barrel assembly respectively arranged corresponding to two eyes, and a focusing assembly arranged between the first lens barrel assembly and the second lens barrel assembly, wherein the first lens barrel assembly comprises a first lens, a first lens barrel, and a first core module arranged inside the first lens barrel; the second lens barrel assembly comprises a second lens, a second lens barrel, and a second core module arranged inside the second lens barrel; the focusing assembly comprises a first focusing wheel and a second focusing wheel that are coaxially arranged and sequentially distributed in the axial direction, the first focusing wheel is capable of rotating around the axial direction and driving the first core module to move forwards and backwards so as to change the distance between the first core module and the first lens, and the second focusing wheel is capable of rotating around the axial direction and driving the second core module to move forwards and backwards so as to change the distance between the second core module and the second lens. In the binocular handheld device, left and right hands of a user can respectively operate the first focusing wheel and the second focusing wheel, so that the focal length adjustment is convenient.

## Description

The present application claims the priorities to Chinese Patent Application No. 202411446028.8, titled "BINOCULAR HANDHELD DEVICE", filed on October 16, 2024 with the China National Intellectual Property Administration, and Chinese Patent Application No. 202422503739.6, titled "BINOCULAR HANDHELD DEVICE AND FOCUSING ASSEMBLY", filed on October 16, 2024 with the China National Intellectual Property Administration, which are incorporated herein by reference in their entirety.

### FIELD

The present application relates to the technical field of imaging devices, and in particular to a handheld binocular device.

### BACKGROUND

Common handheld binocular devices offer two types of lens assemblies, namely focusing lens assemblies and fixed-focus lens assemblies. The focusing lens assembly incorporates a focusing lens that is movable forward and backward along its optical axis. The focusing lens may be driven electrically or manually to achieve motorized or manual focusing. Specifically, motorized focusing involves a motor driving the focusing lens to move forward and backward, and manual focusing is achieved by adjusting a flange to move the focusing lens forward and backward to bring the object into focus.

Motorized focusing provides high degree of automation and saves time and effort. However, since the motor is required, the handheld device has a complex structure and occupies excessive space, and the lens assembly is heavy. Manual focusing has a simpler structure compared with motorized focusing, and is typically implemented in two configurations: a lens focusing ring or a separately arranged focusing handwheel. However, The lens focusing ring is typically located away from the handheld portion, requiring the gripping hand of the user to shift back and forth during focusing, resulting in a poor user experience. The arrangement of the separately arranged focusing wheel may be adapted to specific product conditions. However, the focusing handwheels for the respective lens assemblies of the handheld binocular device are independently arranged, which is not conducive to the overall appearance layout of the product and makes it inconvenient for the user to operate with both hands.

In summary, how to effectively address the issues such as limitations in the arrangement of the focusing structure on the handheld binocular device is a challenge for those skilled in the art.

### SUMMARY

In view of this, an object of the present application is to provide a handheld binocular device, which is structurally configured to effectively address the issues of limitations in the arrangement of the focusing structure and operational inconvenience arising in the handheld binocular device.

To achieve the above object, the following technical solutions are provided according to the present application.

A handheld binocular device includes a first lens barrel assembly and a second lens barrel assembly respectively corresponding to two eyes, and a focusing assembly disposed between the first lens barrel assembly and the second lens barrel assembly.

The first lens barrel assembly includes a first lens assembly, a first lens barrel, and a first core assembly disposed in the first lens barrel. The first core assembly is movable forward and backward along an optical axis of the first lens assembly.

The second lens barrel assembly includes a second lens assembly, a second lens barrel, and a second core assembly disposed in the second lens barrel. The second core assembly is movable forward and backward along an optical axis of the second lens assembly, and the optical axis of the first lens assembly is parallel to the optical axis of the second lens assembly.

The focusing assembly includes a first focusing wheel and a second focusing wheel that are coaxially and sequentially arranged along an axial direction. The first focusing wheel is configured to rotate around the axial direction and drive the first core assembly to move forward and backward to change a distance between the first core assembly and the first lens assembly. The second focusing wheel is configured to rotate around the axial direction and drive the second core assembly to move forward and backward to change a distance between the second core assembly and the second lens assembly.

Optionally, in the handheld binocular device, the focusing assembly includes a first rotating shaft arranged at the first focusing wheel and a second rotating shaft arranged at the second focusing wheel. The first rotating shaft is coaxial with the first focusing wheel, and the second rotating shaft is coaxial with the second focusing wheel. The first rotating shaft is inserted in the second rotating shaft, and the second rotating shaft and the first rotating shaft are rotatable relative to each other. The focusing assembly further includes a first moving member connected to the first core assembly and a second moving member connected to the second core assembly. The first rotating shaft is configured to rotate to move the first moving member forward and backward. The second rotating shaft is configured to rotate to move the second moving member forward and backward.

Optionally, in the handheld binocular device, the first rotating shaft is in threaded fit with the first moving member, and/or
the second rotating shaft is in threaded fit with the second moving member.

Optionally, in the handheld binocular device, the focusing assembly further includes a first connecting member, where one end of the first connecting member is disposed on the first moving member, and the other end of the first connecting member is disposed on the first core assembly; and/or a second connecting member, where one end of the second connecting member is disposed on the second moving member, and the other end of the second connecting member is disposed on the second core assembly.

Optionally, in the handheld binocular device, the first connecting member includes a first pull rod and a first support arm. One end of the first pull rod is connected to the first moving member, and the other end of the first pull rod is connected to one end of the first support arm. The other end of the first support arm is connected to the first core assembly. The first pull rod is parallel to an axial direction of the first rotating shaft. At least a part of the first support arm is perpendicular to the axial direction of the first rotating shaft.

The second connecting member includes a second pull rod and a second support arm. One end of the second pull rod is connected to the second moving member, and the other end of the second pull rod is connected to one end of the second support arm. The other end of the second support arm is connected to the second core assembly. The second pull rod is parallel to an axial direction of the second rotating shaft. At least a part of the second support arm is perpendicular to the axial direction of the second rotating shaft.

Optionally, in the handheld binocular device, the first rotating shaft is inserted in the first focusing wheel and the second focusing wheel. A flange is provided on an outer circumferential surface of the first rotating shaft. A front end of the second rotating shaft faces the flange. A rear end of the first rotating shaft is connected with a first stop member that abuts against the first focusing wheel. A front end of the first rotating shaft is connected with a second stop member. The second stop member is provided with a stop platform that faces the front end of the first rotating shaft.

Optionally, in the handheld binocular device, a thrust ball bearing is disposed between the front end of the second rotating shaft and the flange.

Optionally, in the handheld binocular device, the focusing assembly further includes a spacer. The first focusing wheel and the second focusing wheel are rotatably disposed at a front end and a rear end of the spacer, respectively.

Optionally, in the handheld binocular device, the spacer includes a middle plate body. A first protrusion or a first annular groove is provided on one end face of the middle plate body, and a second protrusion or a second annular groove is provided on the other end face of the middle plate body.

The first focusing wheel is provided with a first position-limiting groove in cooperation with the first protrusion or a first position-limiting protrusion in cooperation with the first annular groove.

The second focusing wheel is provided with a second position-limiting groove in cooperation with the second protrusion or a second position-limiting protrusion in cooperation with the second annular groove.

Optionally, the handheld binocular device further includes:
a first bracket, where the first core assembly is disposed on the first bracket; and
a first linear guide rail, including a guide rail and a slider slidably disposed on the guide rail, where one of the guide rail and the slider is connected to the first bracket, and the other of the guide rail and the slider is configured to connect to a housing of the handheld binocular device.

Optionally, in the handheld binocular device, an end of the first lens barrel is provided with a first eyepiece, and an end of the second lens barrel is provided with a second eyepiece. The first focusing wheel and the second focusing wheel are disposed between the first lens barrel and the second lens barrel, and are located close to the first eyepiece and the second eyepiece.

Optionally, in the handheld binocular device, a fill light is further provided between the first lens barrel assembly and the second lens barrel assembly, and the fill light is disposed at a front side of the focusing assembly.

Optionally, in the handheld binocular device, a battery compartment for accommodating a battery is provided on a lateral surface of the first lens barrel or the second lens barrel.

Optionally, in the handheld binocular device, a functional key is provided on a top surface of the first lens barrel and/or the second lens barrel. The functional key includes at least one of a power key, a menu key, an up key, and a down key.

Optionally, in the handheld binocular device, one of the first lens assembly and the second lens assembly is a visible light lens assembly, and the other of the first lens assembly and the second lens assembly is an infrared lens assembly.

When using the handheld binocular device according to the present application, in order to focus the first lens assembly and the second lens assembly separately, the first focusing wheel and the second focusing wheel are rotated accordingly. The first focusing wheel drives the first core assembly to move forward or backward, so as to change the distance between the first core assembly and the first lens assembly. The second focusing wheel drives the second core assembly to move forward or backward, so as to change the distance between the second core assembly and the second lens assembly. In this way, the focus adjustment of the first lens assembly and the second lens assembly can be achieved independently. In the handheld binocular device, the first focusing wheel and the second focusing wheel have coaxial rotating axes and are sequentially arranged along the axial direction, resulting in a simple and compact structure without interference during motion, which facilitates convenient operation by the user. Moreover, the first focusing wheel and the second focusing wheel are configured to drive the corresponding first core assembly and second core assembly to move forward and backward. Compared with a conventional solution where the first focusing wheel and the second focusing wheel respectively drive the first lens assembly and the second lens assembly, the first focusing wheel and the second focusing wheel can be arranged closer to the handheld part of the device, so that the hand of the user gripping the device does not need to move back and forth when holding and focusing the device during use, thereby making focus adjustment operations more convenient.

Moreover, the first focusing wheel and the second focusing wheel are disposed between the first lens barrel and the second lens barrel, allowing the user to conveniently operate with both hands, such as operating the first focusing wheel and the second focusing wheel with the left and right hands, respectively. Furthermore, the above arrangement reasonably utilizes the space between the first lens barrel and the second lens barrel, thereby facilitating control of the overall size of the handheld device.

### BRIEF DESCRIPTION OF THE DRAWINGS

For more clearly illustrating the technical solutions in embodiments of the present application or in the related art, drawings referred to for describing the embodiments or the related art are briefly described hereinafter. Apparently, the drawings in the following description show only some embodiments of the present application, and other drawings may be obtained by those in the art based on the provided drawings without any creative efforts.
FIG. 1 is a schematic structural view of a handheld binocular device according to a specific embodiment of the present application;
FIG. 2 is a top view of a handheld binocular device according to a specific embodiment of the present application;
FIG. 3 is a bottom view of a handheld binocular device according to a specific embodiment of the present application;
FIG. 4 is a perspective view of a handheld binocular device according to a specific embodiment of the present application;
FIG. 5 is a schematic view showing an internal structure of a handheld binocular device according to a specific embodiment of the present application;
FIG. 6 is a schematic partial sectional view of FIG. 5;
FIG. 7 is an enlarged schematic view of a part A in FIG. 6;
FIG. 8 is a schematic view showing an internal structure of a handheld binocular device according to a specific embodiment of the present application from another perspective; and
FIG. 9 is a schematic exploded structural view of FIG. 5.

Reference numerals in the drawings are as follows:
1 focusing assembly; 2 first lens barrel assembly; 3 second lens barrel assembly; 4 first eyepiece; 5 second eyepiece; 6 fill light; 7 battery compartment; 8 functional key; 81 power key; 82 menu key; 83 up key; 84 down key; 91 first bracket; 92 first linear guide rail; 93 second bracket; 94 second linear guide rail;
21 first lens assembly; 22 first lens barrel; 23 first core assembly;
31 second lens assembly; 32 second lens barrel; 33 second core assembly;
111 first focusing wheel; 112 second focusing wheel; 121 first rotating shaft; 122 second rotating shaft; 131 first moving member; 132 second moving member; 141 first connecting member; 142 second connecting member; 1411 first pull rod; 1412 first support arm; 1421 second pull rod; 1422 second support arm; 151 first stop member; 152 second stop member; 161 thrust ball bearing; 171 spacer; 181 first sealing ring; 182 second sealing ring;
1111 first position-limiting groove; 1121 second position-limiting groove; 1211 flange; 1412a main body portion; 1412b transverse plate; 1412c connecting plate; 1521 stop platform; 1711 middle plate body; 1712 first protrusion; 1713 second protrusion; 1714 fixing portion.

### DETAILED DESCRIPTION OF THE EMBODIMENTS

A handheld binocular device is provided according to an embodiment of the present application, which facilitates the focus adjustment of a first lens assembly and a second lens assembly.

The technical solutions according to the embodiments of the present application will be described clearly and completely as follows with reference to the drawings in the embodiments of the present application. It is apparent that the described embodiments are only some of the embodiments according to the present application, rather than all the embodiments. All other embodiments obtained by those skilled in the art based on the embodiments of the present application without any creative work shall fall within the protection scope of the present application.

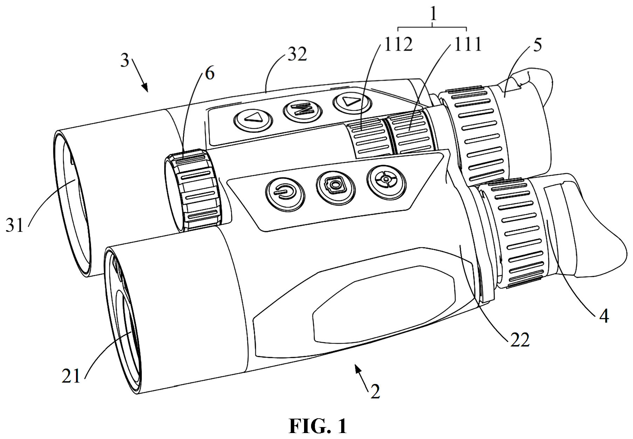

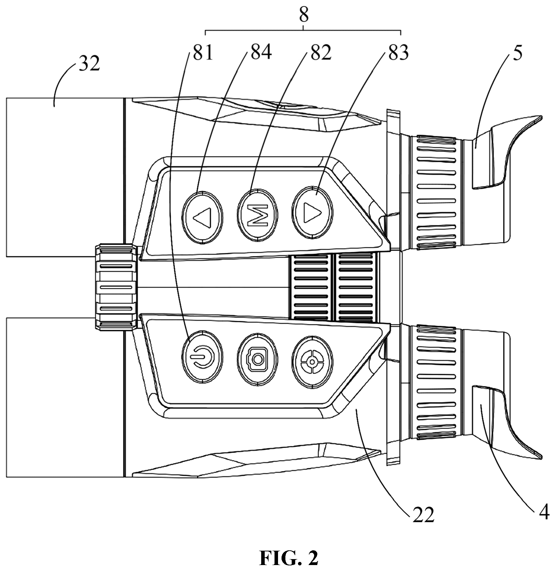

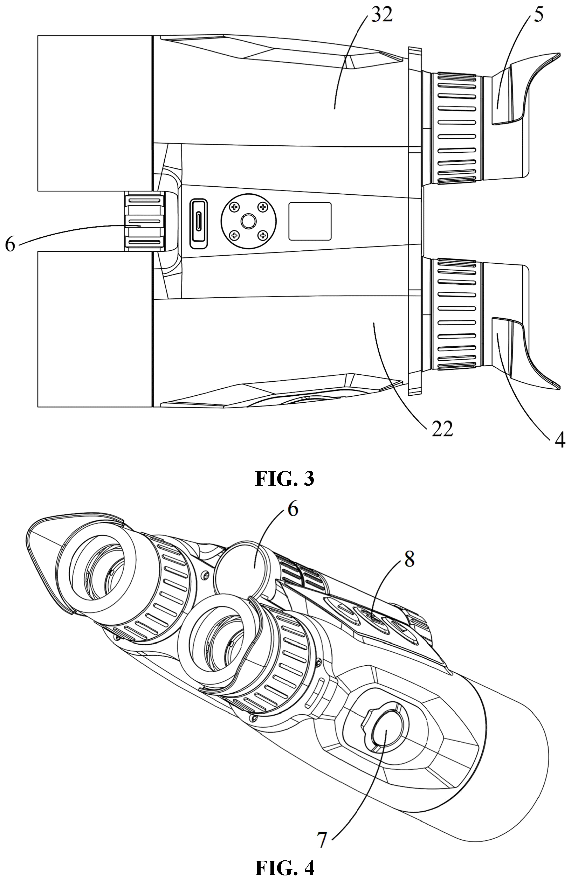

In some embodiments, referring to FIGS. 1 to 5, a handheld binocular device according to the present application includes a first lens barrel assembly 2 and a second lens barrel assembly 3, which are respectively arranged corresponding to two eyes, and a focusing assembly 1 disposed between the first lens barrel assembly 2 and the second lens barrel assembly 3.

The first lens barrel assembly 2 includes a first lens assembly 21, a first lens barrel 22, and a first core assembly 23 disposed in the first lens barrel 22. The first core assembly 23 is movable forward and backward along an optical axis of the first lens assembly 21. The second lens barrel assembly 3 includes a second lens assembly 31, a second lens barrel 32, and a second core assembly 33 disposed in the second lens barrel 32. The second core assembly 33 is movable forward and backward along an optical axis of the second lens assembly 31. The optical axis of the first lens assembly 21 is parallel to the optical axis of the second lens assembly 31. The first core assembly 23 and the second core assembly 33 are used for image detection. Specifically, the first core assembly 23 and the second core assembly 33 can process the light entering through the lens assemblies, generate image data, and send the image data to a display for image display, thereby enabling a user to observe through eyepieces of the handheld device. The specific structure and operational principle of the first core assembly 23 and the second core assembly 33 may be referred to conventional handheld devices, which will not be described in detail herein. The first core assembly 23 is movable forward and backward along the optical axis of the first lens assembly 21, and the second core assembly 33 is movable forward and backward along the optical axis of the second lens assembly 31. In order to facilitate description, in the following embodiments, a direction in which the core assemblies move towards the respective lens assemblies is defined as a forward direction, and a direction opposite to the forward direction is defined as a backward direction. Unlike conventional core assemblies that are fixedly mounted inside a housing of the handheld device, in the present application, the core assemblies are movable forward and backward along the optical axes of the respective lens assemblies in the housing, thereby changing the distances between the lens assemblies and the respective core assemblies to achieve focus adjustment for clear imaging.

Since the focus adjustment in the present application no longer relies on the forward and backward movements of the focusing lenses of the first lens assembly 21 and the second lens assembly 31, the focusing lenses of both the first lens assembly 21 and the second lens assembly 31 can be fixedly mounted. The types of the first lens assembly 21 and the second lens assembly 31 are not specifically limited herein. They may be configured as dual-light lens assemblies. For example, the first lens assembly 21 and the second lens assembly 31 can achieve dual-spectral fusion, and they may be configured as but not limited to a combination of an infrared lens assembly and a low-light lens assembly, such as a combination of an infrared lens assembly and a starlight night-vision lens assembly. Based on needs, the two may be of the same type, such as both being infrared lens assemblies, in which case different usage requirements are satisfied through independent focus adjustment of each lens.

The focusing assembly 1 according to the present application includes a first focusing wheel 111 and a second focusing wheel 112 that are coaxially and sequentially arranged along an axial direction. The first focusing wheel 111 is configured to rotate around the axial direction and drive the first core assembly 23 to move forward and backward, so as to change a distance between the first core assembly 23 and the first lens assembly 21. The second focusing wheel 112 is configured to rotate around the axial direction and drive the second core assembly 33 to move forward and backward, so as to change a distance between the second core assembly 33 and the second lens assembly 31. It can be understood that a positional relationship of the first focusing wheel 111 and the second focusing wheel 112 in the axial direction is not limited herein. FIG. 1 merely shows an exemplary configuration where the first focusing wheel 111 is located at a back side of the second focusing wheel 112. In other embodiments, the first focusing wheel 111 may alternatively be located at a front side of the second focusing wheel 112. The first focusing wheel 111, the first lens assembly 21, and the first core assembly 23 form one group, and the second focusing wheel 112, the second lens assembly 31, and the second core assembly 33 form another group. The first focusing wheel 111 is configured to rotate around the axial direction and drive the first core assembly 23 to move forward and backward, thereby changing the distance between the first core assembly 23 and the first lens assembly 21 to achieve independent focusing of the first lens assembly 21. The second focusing wheel 112 is configured to rotate around the axial direction and drive the second core assembly 33 to move forward and backward, thereby changing the distance between the second core assembly 33 and the second lens assembly 31 to achieve independent focusing of the second lens assembly 31. That is, when the first focusing wheel 111 is rotated separately, the second focusing wheel 112 does not necessarily rotate with the first focusing wheel 111. Correspondingly, when the second focusing wheel 112 is rotated separately, the first focusing wheel 111 does not necessarily rotate with the second focusing wheel 112.

When using the handheld binocular device according to the present application, if separate focusing of the first lens assembly 21 and the second lens assembly 31 is required, the first focusing wheel 111 and the second focusing wheel 112 are rotated accordingly. The first focusing wheel 111 drives the first core assembly 23 to move forward and backward to change the distance between the first core assembly 23 and the first lens assembly 21, and the second focusing wheel 112 drives the second core assembly 33 to move forward and backward to change the distance between the second core assembly 33 and the second lens assembly 31, thereby achieving separate focus adjustment of the first lens assembly 21 and the second lens assembly 31. In this handheld binocular device, the rotation axes of the first focusing wheel 111 and the second focusing wheel 112 coincide with each other, and the first focusing wheel 111 and the second focusing wheel 112 are sequentially arranged along the axial direction, resulting in a simple and compact structure, preventing motion interference, and facilitating user operation. In addition, the first focusing wheel 111 and the second focusing wheel 112 drive the corresponding first core assembly 23 and second core assembly 33 to move forward and backward. Compared with a conventional solution where the first lens assembly 21 and the second lens assembly 31 are moved, the first focusing wheel 111 and the second focusing wheel 112 can be located closer to the handheld part of the device, so that when the user holds and focuses the device during use, the holding hand does not need to move back and forth, making the focus adjustment operation more convenient.

Moreover, the first focusing wheel 111 and the second focusing wheel 112 are disposed between the first lens barrel 22 and the second lens barrel 32, allowing the user to conveniently operate them with both hands. For example, the user can operate the first focusing wheel 111 and the second focusing wheel 112 with the left and right hands respectively. Furthermore, such an arrangement makes effective use of the space between the first lens barrel 22 and the second lens barrel 32, which is conducive to controlling the overall size of the handheld device.

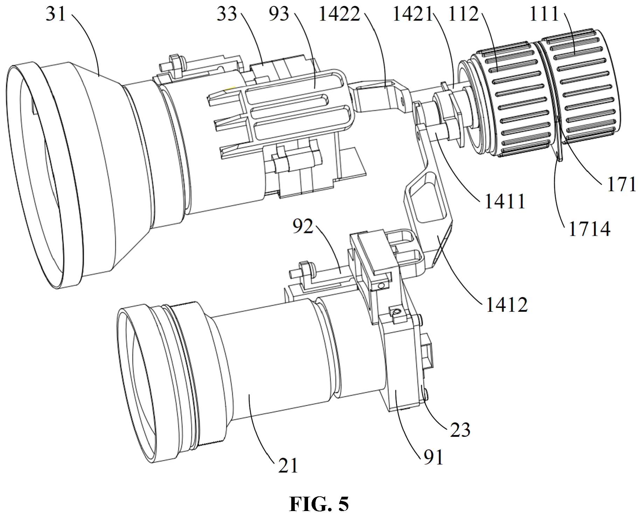

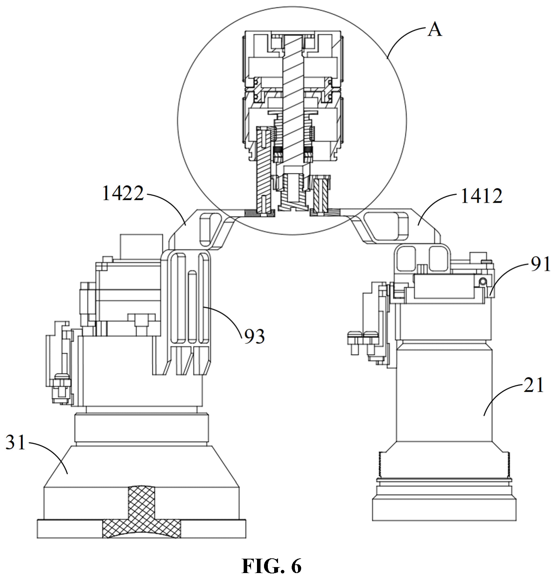

In some embodiments, referring to FIGS. 5 to 7, the focusing assembly 1 according to the present application includes a first rotating shaft 121 arranged at the first focusing wheel 111. The first rotating shaft 121 is coaxial with the first focusing wheel 111. The focusing assembly 1 further includes a second rotating shaft 122 arranged at the second focusing wheel 112. The second rotating shaft 122 is coaxial with the second focusing wheel 112. The second rotating shaft 122 is sleeved on the first rotating shaft 121 and is rotatable relative to the first rotating shaft 121. The focusing assembly 1 further includes a first moving member 131 in cooperation with the first rotating shaft 121. The rotation of the first rotating shaft 121 can be converted into forward and backward movements of the first moving member 131. The first moving member 131 is connected to the first core assembly 23. The focusing assembly 1 further includes a second moving member 132 in cooperation with the second rotating shaft 122. The rotation of the second rotating shaft 122 can be converted into forward and backward movements of the second moving member 132. The second moving member 132 is connected to the second core assembly 33. It can be understood that the first rotating shaft 121 and the first focusing wheel 111 may be configured as two separate components connected using a conventional fixation method or may be configured as an integral structure. The connection of the first moving member 131 and the first core assembly 23 may be a direct connection or an indirect connection through another component. The second rotating shaft 122 and the second focusing wheel 112 may be configured as two separate components connected using a conventional fixation method or may be configured as an integral structure. The connection of the second moving member 132 and the second core assembly 33 may be a direct connection or an indirect connection through another component. The first focusing wheel 111 is connected to the first core assembly 23 through the first rotating shaft 121 and the first moving member 131. When the first focusing wheel 111 is rotated, the first rotating shaft 121 is rotated synchronously. The rotation of the first rotating shaft 121 is converted into a linear movement of the first moving member 131, which in turn drives the first core assembly 23 to move forward and backward. Through the cooperation of the first rotating shaft 121 and the first moving member 131, not only can the rotation be converted into the linear movement, but also a force applied by the first focusing wheel 111 can be transmitted. With configurations of a length and a shape of the first moving member 131, the relative position of the first focusing wheel 111 and the first core assembly 23 can be flexibly determined, and thus the first focusing wheel 111 can be more flexibly arranged on the handheld device. The operation manner of the second focusing wheel 112 may be the same as that of the first focusing wheel 111, which is not described in detail herein.

In a case requiring separate focusing of the first lens assembly 21 and the second lens assembly 31, the first focusing wheel 111 is rotated, and the first rotating shaft 121 arranged at the first focusing wheel 111 is rotated accordingly. The first rotating shaft 121 cooperates with the first moving member 131 to convert the rotation of the first rotating shaft 121 into forward and backward movements of the first moving member 131. The first moving member 131 drives the first core assembly 23 to move forward and backward, changing the distance between the first core assembly 23 and the first lens assembly 21 to achieve separate focus adjustment of the first lens assembly 21. Similarly, by rotating the second focusing wheel 112, the second rotating shaft 122 arranged at the second focusing wheel 112 rotates accordingly. The second rotating shaft 122 cooperates with the second moving member 132 to convert the rotation of the second rotating shaft 122 into the forward and backward movements of the second moving member 132. The second moving member 132 drives the second core assembly 33 to move forward and backward, changing the distance between the second core assembly 33 and the second lens assembly 31 to achieve separate focus adjustment of the second lens assembly 31.

In the focusing assembly, through the configurations of lengths and shapes of the first moving member 131 and the second moving member 132, the relative position of the first focusing wheel 111 and the first core assembly 23 and the relative position of the second focusing wheel 112 and the second core assembly 33 can be more flexibly determined, and thus the arrangements of the first focusing wheel 111 and the second focusing wheel 112 on the handheld binocular device are more flexible.

In some embodiments, the first rotating shaft 121 is in threaded fit with the first moving member 131. The rotation of the first rotating shaft 121 is converted into the linear movement of the first moving member 131 through the threaded fit. It can be understood that the first rotating shaft 121 is rotatable around the axial direction, and is prevented from linearly moving along the axial direction, so that the rotation of the first rotating shaft 121 is converted into the axial movement of the first moving member 131 through the threaded fit. The threaded fit offers high adjustment precision, convenient assembly, and a simple and compact structure. Specifically, the first rotating shaft 121 is a lead screw with external threads, and the first moving member 131 is a nut that is threadedly connected to the lead screw. When the lead screw rotates, the nut is movable linearly along the lead screw.

In other embodiments, the first rotating shaft 121 is a rotating rod, and the first moving member 131 is a movable ring sleeved on the rotating rod. One of an inner wall of the movable ring and an outer wall of the rotating rod is provided with a sliding groove, and the other of the inner wall of the movable ring and the outer wall of the rotating rod is provided with a guide protrusion, which is inserted in the sliding groove. Differing from the above-mentioned threaded fit between the first rotating shaft 121 and the first moving member 131, in this embodiment, the sliding groove is provided on one of mating surfaces of the rotating rod and the movable ring and the guide protrusion is provided on the other. Through configuration of a path of the sliding groove, when the rotating rod is rotated, the movable ring is driven by the guide protrusion to move linearly, thereby driving the first core assembly 23 to move linearly. The cooperation of the sliding groove and the guide protrusion has a simple structure and is easy to manufacture.

In some embodiments, the second rotating shaft 122 is in threaded fit with the second moving member 132. Alternatively, the second rotating shaft 122 cooperates with the second moving member 132 through a sliding groove and a guide protrusion. The specific cooperation manner may be referred to that of the first rotating shaft 121 and the first moving member 131 described in the above embodiment, and is not described in detail here.

In some embodiments, the focusing assembly 1 further includes a first connecting member 141. One end of the first connecting member 141 is disposed on the first moving member 131, and the other end of the first connecting member 141 is disposed on the first core assembly 23. That is, the first moving member 131 and the first core assembly 23 are connected through the first connecting member 141. The shape and size of the first connecting member 141 are determined based on a position of the first core assembly 23 inside the first lens barrel 22 and a position of the first focusing wheel 111. The first connecting member 141 further enhances the flexibility of the arrangement of the first focusing wheel 111.

In some embodiments, the focusing assembly 1 further includes a second connecting member 142. One end of the second connecting member 142 is disposed on the second moving member 132, and the other end of the second connecting member 142 is disposed on the second core assembly 33. The second connecting member 142 also enhances the flexibility of the arrangement of the second focusing wheel 112. The specific structure of the second connecting member 142 may be the same as or different from that of the first connecting member 141, and may be determined based on the arrangements of the first core assembly 23 and the second core assembly 33 and the internal spaces of the first lens barrel 22 and the second lens barrel 32.

In some embodiments, the first connecting member 141 includes a first pull rod 1411 and a first support arm 1412. One end of the first pull rod 1411 is connected to the first moving member 131, and the other end of the first pull rod 1411 is connected to one end of the first support arm 1412. The other end of the first support arm 1412 is connected to the first core assembly 23. The first pull rod 1411 is parallel to an axial direction of the first rotating shaft 121. At least a part of the first support arm 1412 is perpendicular to the axial direction of the first rotating shaft 121. It can be understood that the first pull rod 1411 and the first support arm 1412 may be separate components connected using a conventional fixation method or may be of an integral structure. The first pull rod 1411 is parallel to the axial direction of the first rotating shaft 121, and at least a part of the first support arm 1412 is perpendicular to the axial direction of the first rotating shaft 121, so that the first core assembly 23 and the first focusing wheel 111 are offset relative to each other in both the axial direction and a direction perpendicular to the axial direction, making the spatial arrangement of the first focusing wheel 111 more flexible and less restricted. Specifically, the first focusing wheel 111 and the second focusing wheel 112 are disposed close to a first eyepiece 4 and a second eyepiece 5 of the handheld binocular device. The connection between the first focusing wheel 111 and the first core assembly 23 is achieved through the first pull rod 1411 and the first support arm 1412. The connection between the second focusing wheel 112 and the second core assembly 33 is achieved through the second pull rod 1421 and the second support arm 1422. As such, the first focusing wheel 111 and the second focusing wheel 112 are close to the gripping position of the handheld device, making operation more convenient. This reduces the weight of an end of the handheld device where the lenses are located, providing the user with a better experience when holding the handheld device.

In some embodiments, the second connecting member 142 may adopt the same configurations as the first connecting member 141. Specifically, the second connecting member 142 includes a second pull rod 1421 and a second support arm 1422. One end of the second pull rod 1421 is connected to the second moving member 132, and the other end of the second pull rod 1421 is connected to one end of the second support arm 1422. The other end of the second support arm 1422 is connected to the second core assembly 33. The second pull rod 1421 is parallel to an axial direction of the second rotating shaft 122. At least a part of the second support arm 1422 is perpendicular to the axial direction of the second rotating shaft 122. Lengths of the second pull rod 1421 and the first pull rod 1411 may be identical or different, and lengths of the second support arm 1422 and the first support arm 1412 may be identical or different.

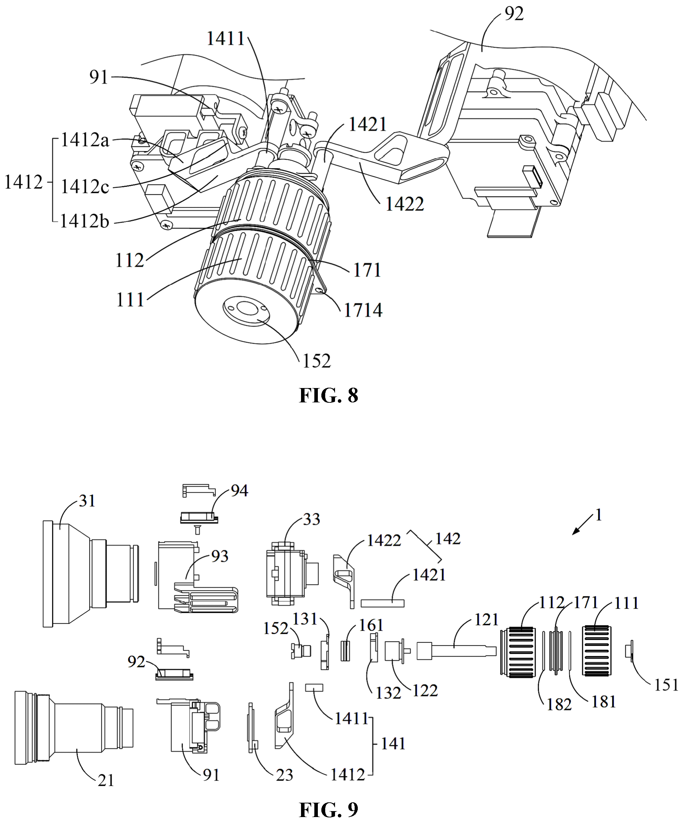

In some embodiments, referring to FIG. 8, the first support arm 1412 includes a main body portion 1412a and a transverse plate 1412b extending perpendicular to the axial direction from the main body portion 1412a. The main body portion 1412a is configured to connect to the first core assembly 23. In a case where the first core assembly 23 is mounted on a first bracket 91, the main body portion 1412a is connected to the first bracket 91. Specifically, one end of the main body portion 1412a is in contact with an end face of the first bracket 91 for positioning. The main body portion 1412a is provided with a screw hole and is fastened to the first bracket 91 by a screw. Specifically, the main body portion 1412a is platy and is in the shape of a right-angled triangle. The screw hole is provided on an end face corresponding to the hypotenuse of the right-angled triangle. An end face corresponding to one of the right-angled sides is in contact with the first bracket 91. The above arrangement achieves reliable connection while reducing the size and thus reducing space occupancy. Further, a connecting plate 1412c is provided between the transverse plate 1412b and the main body portion 1412a. The connecting plate 1412c functions as a reinforcement to prevent deformation of the transverse plate 1412b. It can be understood that the first support arm 1412 may specifically has an integral structure, that is, the transverse plate 1412b, the main body portion 1412a, and the connecting plate 1412c described above may be integrally formed. The second support arm 1422 may specifically adopt the same configuration as the first support arm 1412, which is not described in detail herein.

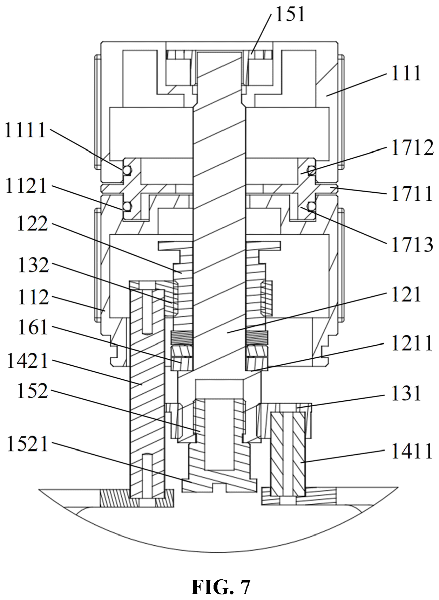

In some embodiments, referring to FIG. 7, the first rotating shaft 121 is inserted in the first focusing wheel 111 and the second focusing wheel 112. The second rotating shaft 122 is sleeved on the first rotating shaft 121. An outer circumferential surface of the first rotating shaft 121 is provided with a flange 1211. A front end of the second rotating shaft 122 faces the flange 1211. A rear end of the first rotating shaft 121 is connected with a first stop member 151 that abuts against the first focusing wheel 111. A front end of the first rotating shaft 121 is connected with a second stop member 152. The second stop member 152 is provided with a stop platform 1521, which faces the front end of the first rotating shaft 121. The stop platform 1521 is configured to abut against the housing of the handheld device to prevent axial displacement of the first rotating shaft 121. The flange 1211 provided on the first rotating shaft 121 cooperates with the second rotating shaft 122 to axially limit the second rotating shaft 122. With the above effects, both the first rotating shaft 121 and the second rotating shaft 122 are axially limited, and accordingly, both the first focusing wheel 111 and the second focusing wheel 112 are axially limited. They are only allowed to rotate around the axial direction without linear movement. During mounting, the first rotating shaft 121 is inserted in the second rotating shaft 122, the first focusing wheel 111 and the second focusing wheel 112 are respectively sleeved on and fixedly connected to the first rotating shaft 121 and the second rotating shaft 122. Then, the first stop member 151 is connected to the rear end of the first rotating shaft 121 and abuts against the first focusing wheel 111 to limit the first focusing wheel 111 in the axial direction. The whole assembly is then placed at an appropriate position in the housing, and the second stop member 152 is connected to the front end of the first rotating shaft 121. A part of the housing is sandwiched between the stop platform 1521 and the front end of the first rotating shaft 121. The second rotating shaft 122 abuts against the flange 1211, so that both the first rotating shaft 121 and the second rotating shaft 122 are reliably limited in the axial direction. This configuration not only achieves the position-limiting of the first rotating shaft 121 and the second rotating shaft 122 in the axial direction to achieve the position-limiting of the first focusing wheel 111 and the second focusing wheel 112 in the axial direction, but also has a simple and compact structure and is convenient for assembly.

Specifically, the first stop member 151 is a nut that is threadedly connected to the rear end of the first rotating shaft 121. One end face of the nut presses against the first focusing wheel 111. An end face of the first focusing wheel 111 is specifically provided with a counterbore hole, in which the nut is disposed, and the other end face of the nut does not protrude beyond the end face of the first focusing wheel 111, making the appearance of the handheld binocular device neater and more aesthetically pleasing. The second stop member 152 is specifically threadedly connected to the first rotating shaft 121. The threaded connection facilitates easy assembly and disassembly. Furthermore, the engagement length of the second stop member 152 is adjustable through screwing in and out, thereby better adapting to the housing to ensure reliable position-limiting.

In some embodiments, a thrust ball bearing 161 is disposed between the front end of the second rotating shaft 122 and the flange 1211. The thrust ball bearing 161 prevents direct contact and friction between the second rotating shaft 122 and the flange 1211, reducing the frictional resistance when the first rotating shaft 121 rotates independently with the first focusing wheel 111 and when the second rotating shaft 122 rotates independently with the second focusing wheel 112. This facilitates focus adjustment by the user and prevents frictional wear. In other embodiments, the thrust ball bearing 161 may not be provided. For example, smooth wear-resistant coatings may be applied to the surfaces of the second rotating shaft 122 and the flange 1211 that come into contact with each other, which can also reduce friction.

In some embodiments, the focusing assembly 1 according to the present application further includes a spacer 171. The first focusing wheel 111 and the second focusing wheel 112 are rotatably disposed at front and rear ends of the spacer 171, respectively. The spacer 171 disposed between the first focusing wheel 111 and the second focusing wheel 112 isolates them from each other, so that the first focusing wheel 111 and the second focusing wheel 112 are allowed to rotate independently without affecting each other. Moreover, the spacer 171 can also integrate the first focusing wheel 111 and the second focusing wheel 112 into a whole, facilitating their rotational mounting in the housing. Specifically, the spacer 171 is provided with a fixing portion 1714, such as a bolt hole, for fixed connection with the housing, so as to assemble the focusing assembly 1 with the housing. The spacer 171 specifically includes a protruding portion that protrudes beyond outer circumferential surfaces of the first focusing wheel 111 and the second focusing wheel 112, and the fixing portion 1714, such as the bolt hole, is provided on the protruding portion.

In some embodiments, the spacer 171 includes a middle plate body 1711. One end face of the middle plate body 1711 is provided with a first protrusion 1712 or a first annular groove, and the other end face of the middle plate body 1711 is provided with a second protrusion 1713 or a second annular groove. The first focusing wheel 111 is provided with a first position-limiting groove 1111 that cooperates with the first protrusion 1712 or a first position-limiting protrusion that cooperates with the first annular groove. The second focusing wheel 112 is provided with a second position-limiting groove 1121 that cooperates with the second protrusion 1713 or a second position-limiting protrusion that cooperates with the second annular groove. The first focusing wheel 111 and the second focusing wheel 112 are arranged sequentially along the axial direction. In a case where the first focusing wheel 111 is located at a rear side of the second focusing wheel 112, a rear end face of the middle plate body 1711 is correspondingly provided with the first protrusion 1712 or the first annular groove, and a front end face of the middle plate body 1711 is provided with the second protrusion 1713 or the second annular groove. When the positions of the first focusing wheel 111 and the second focusing wheel 112 are interchanged, the front end face of the middle plate body 1711 is correspondingly provided with the first protrusion 1712 or the first annular groove, and the rear end face of the middle plate body 1711 is provided with the second protrusion 1713 or the second annular groove.

In a solution, an end face of the middle plate body 1711 is provided with a first protrusion 1712, and the first focusing wheel 111 is provided with a first position-limiting groove 1111 that cooperates with the first protrusion 1712. The first protrusion 1712 is inserted into the first position-limiting groove 1111. Both the first protrusion 1712 and the first position-limiting groove 1111 are annular in shape, so as to perform position-limiting and guide functions, thereby facilitating the assembly of the first focusing wheel 111 with the spacer 171 and guiding the rotation of the first focusing wheel 111.

In another solution, an end face of the middle plate body 1711 is provided with a first annular groove, and the first focusing wheel 111 is provided with a first position-limiting protrusion that cooperates with the first annular groove. The first position-limiting protrusion is inserted into the first annular groove, so as to perform position-limiting and guide functions, thereby facilitating the assembly of the first focusing wheel 111 with the spacer 171 and guiding the rotation of the first focusing wheel 111.

The cooperation configuration between the spacer 171 and the second focusing wheel 112 may be similar to the above, which is not described in detail herein. It can be understood that two ends of the middle plate body 1711 may both be provided with protrusions (the first protrusion 1712 and the second protrusion 1713) or both be provided with annular grooves (the first annular groove and the second annular groove), or one of the ends is provided with a protrusion and the other is provided with an annular groove (respectively provided with the first protrusion 1712 and the second annular groove, or the first annular groove and the second protrusion 1713).

Specifically, a first sealing ring 181 is disposed between the first protrusion 1712 and the first position-limiting groove 1111, and a second sealing ring 182 is disposed between the second protrusion 1713 and the second position-limiting groove 1121, so as to achieve sealing of the first focusing wheel 111 and the second focusing wheel 112.

In some embodiments, the handheld binocular device further includes a first bracket 91 and a first linear guide rail 92. The first core assembly 23 is disposed on the first bracket 91. The first linear guide rail 92 includes a guide rail and a slider that is slidably disposed on the guide rail. One of the guide rail and the slider is connected to the first bracket 91, and the other of the guide rail and the slider is configured to connect to the housing of the handheld binocular device. It can be understood that the other of the guide rail and the slider may be directly fixed to the housing, or may be fixed to the first lens assembly 21 connected to the housing, that is, indirectly connected to the housing. The specific connection manner thereof may be determined based on the internal layout of the housing. The first bracket 91 functions to mount and protect the first core assembly 23, and the specific structure of the first bracket 91 may be determined according to requirements, which is not specifically limited herein. It can be understood that the guide rail of the first linear guide rail 92 is parallel to an axial direction of the first core assembly 23. With the first linear guide rail 92, it can limit and guide the linear movement of the first core assembly 23, ensuring the coaxiality of the first core assembly 23 and the first lens assembly 21, and reducing the resistance to the movement of the first core assembly 23 relative to the first lens assembly 21.

In some embodiments, the handheld binocular device further includes a second bracket 93 and a second linear guide rail 94. The second core assembly 33 is disposed on the second bracket 93. The second linear guide rail 94 includes a guide rail and a slider that is slidably disposed on the guide rail. One of the guide rail and the slider of the second linear guide rail 94 is connected to the second bracket 93, and the other of the guide rail and the slider is configured to connect to the housing of the handheld binocular device. With the second linear guide rail 94, it can limit and guide the linear movement of the second core assembly 33, ensuring the coaxiality of the second core assembly 33 and the second lens assembly 31.

In some embodiments, referring to FIGS. 1 to 4, an end of the first lens barrel 22 of the handheld binocular device is provided with a first eyepiece 4, and an end of the second lens barrel 32 is provided with a second eyepiece 5. The first focusing wheel 111 and the second focusing wheel 112 are disposed between the first lens barrel 22 and the second lens barrel 32, and are arranged close to the first eyepiece 4 and the second eyepiece 5. In this way, the first focusing wheel 111 and the second focusing wheel 112 are located close to the gripping position of the handheld device, making operation more convenient. This reduces the weight of the end of the handheld device where the lenses are located, providing the user with a better experience when holding and focusing the handheld device.

In some embodiments, referring to FIGS. 1 to 4, a fill light 6 is further provided between the first lens barrel assembly 2 and the second lens barrel assembly 3. The fill light 6 is disposed at a front side of the focusing assembly 1. The fill light 6 enables fill lighting during use of the handheld binocular device to meet operational requirements in special environments. In an example, the fill light 6 is coaxial with the focusing assembly 1 to make effective use of space and make the overall appearance of the handheld binocular device more neater.

In some embodiments, referring to FIGS. 1 to 4, a battery compartment 7 for accommodating a battery is provided on a lateral surface of the first lens barrel 22 or the second lens barrel 32. The battery is used to power the handheld binocular device, such as powering the first core assembly 23 and the second core assembly 33. The arrangement of the battery compartment 7 for accommodating the battery on the lateral surface of the first lens barrel 22 or the second lens barrel 32 makes effective use of space and facilitates replacement or repair of the battery.

In some embodiments, referring to FIGS. 1 to 4, a functional key 8 is provided on a top surface of the first lens barrel 22 and/or the second lens barrel 32. The functional key 8 includes at least one of a power key 81, a menu key 82, an up key 83, and a down key 84. By arranging the functional key 8 for controlling the handheld binocular device on the top surface of the first lens barrel 22, or on the top surface of the second lens barrel 32, or separately on the top surfaces of both the first lens barrel 22 and the second lens barrel 32, the user can conveniently operate them with either hand. For example, the user can operate the functional key 8 with left and right hands respectively.

In some embodiments, one of the first lens assembly 21 and the second lens assembly 31 is a visible light lens assembly, and the other is an infrared lens assembly.

An assembly method of the handheld binocular device according to the present application is described below with a specific embodiment.

In this embodiment, the assembly method includes the following the steps.

In Step 1, the first rotating shaft 121 is mated with the first moving member 131, and the second rotating shaft 122 is mated with the second moving member 132. The assembly formed by the first rotating shaft 121 and the first moving member 131 and the assembly formed by the second rotating shaft 122 and the second moving member 132 are coaxially assembled via the thrust ball bearing 161.

In Step 2, the second pull rod 1421 is secured and fixed to the second moving member 132 by a screw, and similarly, the first pull rod 1411 is secured and fixed to the first moving member 131 by a screw, so as to allow transmission of pulling (pushing) forces.

In Step 3, the assembly formed by the above steps is inserted into the second focusing wheel 112, and the second focusing wheel 112 is fixed to the second rotating shaft 122 by a screw. Then, the assembly formed by the above steps is inserted into the spacer 171 and the first focusing wheel 111 in sequence. The spacer 171 is fixed to the housing by a screw, and an end of the first focusing wheel 111 is secured and fixed to the first rotating shaft 121 with the first stop member.

In Step 4, the other end of the first rotating shaft 121 is threadedly engaged with the second stop member to prevent the forward and backward movement of the assembled components.

In Step 5, the first pull rod 1411 is secured to the first support arm 1412 by a screw, and the second pull rod 1421 is secured to the second support arm 1422 by a screw, so as to allow transmission of pulling/pushing forces.

In Step 6, the first core assembly 23 is fixed and secured to the first bracket 91 by a screw. The first bracket 91 is fixed to one side of the first linear guide rail 92, and the other side of the first linear guide rail 92 is fixed via a linear guide rail bracket that is secured and fixed to the first lens assembly 21 or the housing. The second core assembly 33, the second bracket 93, and the second linear guide rail 94 are fixed in the same manner.

In Step 7, the first bracket 91 is fixedly connected to the first support arm 1412 by a screw. The second bracket 93 is fixedly connected to the second support arm 1422 by a screw.

During focusing, when the user rotates the first focusing wheel 111, the first rotating shaft 121 rotates along with the first focusing wheel 111, and the rotation of the first rotating shaft 121 is converted into the linear movement of the first moving member 131. The first core assembly 23 is moved forward and backward through the first pull rod 1411, the first support arm 1412, and the first bracket 91, thereby achieving focusing of the first lens assembly 21. When the user rotates the second focusing wheel 112, the second rotating shaft 122 rotates along with the second focusing wheel 112, and the rotation of the second rotating shaft 122 is converted into the linear movement of the second moving member 132. The second moving member 132 moves the second pull rod 1421 forward and backward, and the second pull rod 1421 moves the second core assembly 33 forward and backward through the second support arm 1422 and the second bracket 93, thereby achieving focusing of the second lens assembly 31.

The embodiments in the specification are described in a progressive manner, and each embodiment focuses on its difference from other embodiments. Same and similar parts among the embodiments may be referred to each other.

According to the above description of the disclosed embodiments, those skilled in the art can implement or practice the present application. Various modifications to these embodiments are obvious to those skilled in the art, and the general principles defined herein may be implemented in other embodiments without departing from the spirit or scope of the present application. Therefore, the present application is not limited to the embodiments described herein, but should be in accordance with the broadest scope consistent with the principle and novel features disclosed herein.

## Claims

1. A handheld binocular device, comprising:
a first lens barrel assembly (2) and a second lens barrel assembly (3) respectively corresponding to two eyes; and
a focusing assembly (1) disposed between the first lens barrel assembly (2) and the second lens barrel assembly (3), wherein
the first lens barrel assembly (2) comprises a first lens assembly (21), a first lens barrel (22), and a first core assembly (23) disposed in the first lens barrel (22), and the first core assembly (23) is movable forward and backward along an optical axis of the first lens assembly (21);
the second lens barrel assembly (3) comprises a second lens assembly (31), a second lens barrel (32), and a second core assembly (33) disposed in the second lens barrel (32), the second core assembly (33) is movable forward and backward along an optical axis of the second lens assembly (31), and the optical axis of the first lens assembly (21) is parallel to the optical axis of the second lens assembly (31); and
the focusing assembly (1) comprises a first focusing wheel (111) and a second focusing wheel (112) that are coaxially and sequentially arranged along an axial direction, the first focusing wheel (111) is configured to rotate around the axial direction and drive the first core assembly (23) to move forward and backward to change a distance between the first core assembly (23) and the first lens assembly (21), and the second focusing wheel (112) is configured to rotate around the axial direction and drive the second core assembly (33) to move forward and backward to change a distance between the second core assembly (33) and the second lens assembly (31).

2. The handheld binocular device according to claim 1, wherein the focusing assembly (1) comprises a first rotating shaft (121) arranged at the first focusing wheel (111) and a second rotating shaft (122) arranged at the second focusing wheel (112), the first rotating shaft (121) is coaxial with the first focusing wheel (111), and the second rotating shaft (122) is coaxial with the second focusing wheel (112);
the first rotating shaft (121) is inserted in the second rotating shaft (122), and the second rotating shaft (122) and the first rotating shaft (121) are rotatable relative to each other; and
the focusing assembly (1) further comprises a first moving member (131) connected to the first core assembly (23) and a second moving member (132) connected to the second core assembly (33), the first rotating shaft (121) is configured to rotate to move the first moving member (131) forward and backward, and the second rotating shaft (122) is configured to rotate to move the second moving member (132) forward and backward.

3. The handheld binocular device according to claim 2, wherein
the first rotating shaft (121) is in threaded fit with the first moving member (131); and/or
the second rotating shaft (122) is in threaded fit with the second moving member (132).

4. The handheld binocular device according to claim 2, wherein the focusing assembly (1) further comprises:
a first connecting member (141), wherein one end of the first connecting member (141) is disposed on the first moving member (131), and the other end of the first connecting member (141) is disposed on the first core assembly (23); and/or
a second connecting member (142), wherein one end of the second connecting member (142) is disposed on the second moving member (132), and the other end of the second connecting member (142) is disposed on the second core assembly (33).

5. The handheld binocular device according to claim 4, wherein
the first connecting member (141) comprises a first pull rod (1411) and a first support arm (1412), one end of the first pull rod (1411) is connected to the first moving member (131), the other end of the first pull rod (1411) is connected to one end of the first support arm (1412), the other end of the first support arm (1412) is connected to the first core assembly (23), the first pull rod (1411) is parallel to an axial direction of the first rotating shaft (121), and at least a part of the first support arm (1412) is perpendicular to the axial direction of the first rotating shaft (121); and
the second connecting member (142) comprises a second pull rod (1421) and a second support arm (1422), one end of the second pull rod (1421) is connected to the second moving member (132), the other end of the second pull rod (1421) is connected to one end of the second support arm (1422), the other end of the second support arm (1422) is connected to the second core assembly (33), the second pull rod (1421) is parallel to an axial direction of the second rotating shaft (122), and at least a part of the second support arm (1422) is perpendicular to the axial direction of the second rotating shaft (122).

6. The handheld binocular device according to claim 2, wherein the first rotating shaft (121) is inserted in the first focusing wheel (111) and the second focusing wheel (112), a flange (1211) is provided on an outer circumferential surface of the first rotating shaft (121), a front end of the second rotating shaft (122) faces the flange (1211), a rear end of the first rotating shaft (121) is connected with a first stop member (151) that abuts against the first focusing wheel (111), a second stop member (152) is connected to a front end of the first rotating shaft (121), and the second stop member (152) is provided with a stop platform (1521) that faces the front end of the first rotating shaft (121).

7. The handheld binocular device according to claim 6, wherein a thrust ball bearing (161) is disposed between the front end of the second rotating shaft (122) and the flange (1211).

8. The handheld binocular device according to any one of claims 1 to 7, wherein the focusing assembly (1) further comprises a spacer (171), and the first focusing wheel (111) and the second focusing wheel (112) are rotatably disposed at a front end and a rear end of the spacer (171), respectively.

9. The handheld binocular device according to claim 8, wherein
the spacer (171) comprises a middle plate body (1711), a first protrusion (1712) or a first annular groove is provided on one end face of the middle plate body (1711), and a second protrusion (1713) or a second annular groove is provided on the other end face of the middle plate body (1711);
the first focusing wheel (111) is provided with a first position-limiting groove (1111) in cooperation with the first protrusion (1712) or a first position-limiting protrusion in cooperation with the first annular groove; and
the second focusing wheel (112) is provided with a second position-limiting groove (1121) in cooperation with the second protrusion (1713) or a second position-limiting protrusion in cooperation with the second annular groove.

10. The handheld binocular device according to any one of claims 1 to 7, further comprising:
a first bracket (91), wherein the first core assembly (23) is disposed on the first bracket (91); and
a first linear guide rail (92), comprising a guide rail and a slider slidably disposed on the guide rail, wherein one of the guide rail and the slider is connected to the first bracket (91), and the other of the guide rail and the slider is configured to connect to a housing of the handheld binocular device.

11. The handheld binocular device according to any one of claims 1 to 7, wherein an end of the first lens barrel (22) is provided with a first eyepiece (4), an end of the second lens barrel (32) is provided with a second eyepiece (5), and the first focusing wheel (111) and the second focusing wheel (112) are disposed between the first lens barrel (22) and the second lens barrel (32) and are located close to the first eyepiece (4) and the second eyepiece (5).

12. The handheld binocular device according to any one of claims 1 to 7, wherein a fill light (6) is further provided between the first lens barrel assembly (2) and the second lens barrel assembly (3), and the fill light (6) is disposed at a front side of the focusing assembly (1).

13. The handheld binocular device according to any one of claims 1 to 7, wherein a battery compartment (7) for accommodating a battery is provided on a lateral surface of the first lens barrel (22) or the second lens barrel (32).

14. The handheld binocular device according to any one of claims 1 to 7, wherein a functional key (8) is provided on a top surface of the first lens barrel (22) and/or the second lens barrel (32), and the functional key comprises at least one of a power key (81), a menu key (82), an up key (83), and a down key (84).

15. The handheld binocular device according to any one of claims 1 to 7, wherein one of the first lens assembly (21) and the second lens assembly (31) is a visible light lens assembly, and the other of the first lens assembly (21) and the second lens assembly (31) is an infrared lens assembly.
